**Europäisches Patentamt**

**European Patent Office**

**Office européen des brevets**

(19)

(11) Veröffentlichungsnummer : **0 370 080 B1**

(12)

# EUROPÄISCHE PATENTSCHRIFT

(45) Veröffentlichungstag der Patentschrift :
**22.07.92 Patentblatt 92/30**

(51) Int. Cl.$^5$ : **B60T 8/32**

(21) Anmeldenummer : **89904025.7**

(22) Anmeldetag : **20.03.89**

(86) Internationale Anmeldenummer :
**PCT/EP89/00298**

(87) Internationale Veröffentlichungsnummer :
**WO 89/10286 02.11.89 Gazette 89/26**

(54) **ELEKTROHYDRAULISCHE DRUCKREGELVORRICHTUNG.**

(30) Priorität : **20.04.88 DE 3813139**
**20.04.88 DE 3813138**

(43) Veröffentlichungstag der Anmeldung :
**30.05.90 Patentblatt 90/22**

(45) Bekanntmachung des Hinweises auf die
Patenterteilung :
**22.07.92 Patentblatt 92/30**

(84) Benannte Vertragsstaaten :
**DE FR GB**

(56) Entgegenhaltungen :
**EP-A- 0 105 219**
**DE-A- 3 013 507**
**DE-A- 3 121 883**
**DE-A- 3 609 974**
**GB-A- 2 188 995**

(73) Patentinhaber : **ALFRED TEVES GMBH**
**Guerickestrasse 7**
**W-6000 Frankfurt/Main 90 (DE)**

(72) Erfinder : **BURGDORF, Jochen**
**Neugasse 11**
**W-6050 Offenbach-Rumpenheim (DE)**
Erfinder : **REINARTZ, Hans-Dieter**
**In der Römerstadt 169**
**W-6000 Frankfurt/Main 50 (DE)**
Erfinder : **VOLZ, Peter**
**In den Wingerten 14**
**W-6100 Darmstadt (DE)**
Erfinder : **VELLMER, Arnim**
**Bernhard Mannfeldweg 12**
**W-6000 Frankfurt/Main 70 (DE)**

(74) Vertreter : **Grau, Ulf**
**c/o ALFRED TEVES GMBH Guerickestrasse 7**
**W-6000 Frankfurt (M) 90 (DE)**

**Beschreibung**

Die Erfindung betrifft eine elektrohydraulische Druckregelvorrichtung, insbesondere Bremsdruckregelvorrichtung, wie Antiblockierregelvorrichtung, Antriebsschlupfregelvorrichtung, nach dem Oberbegriff des Anspruch 1.

Es sind bereits elektrohydraulische Druckregelvorrichtungen für Antiblockierregelsysteme und Antriebsschlupfregelsysteme bekannt geworden, die einen elektronischen Regler und einen Ventilblock aufweisen.

So zeigt die Deutsche Patentanmeldung P 37 23 106.5 eine Bremsdruckregelvorrichtung für die Antiblockier- und Antriebsschlupfregelung für Kraftfahrzeuge, wobei die Bremsanlage versehen ist mit einem Hauptzylinder, einem hydraulischen Verstärker für den Hauptzylinder, einer Druckmittelversorgungsanlage, vorzugsweise bestehend aus einer motorgetriebenen Pumpe und einem Druckspeicher, einem Druckmodulator, vorzugsweise bestehend aus elektromagnetisch betätigbaren Ein- und Auslaßventilen für die Radzylinder, Sensoren für die Erfassung der Radumfangsgeschwindigkeit, einem elektronischen Regler für die Verarbeitung der Sensorsignale und für die Erzeugung von Ausgangssignalen zur Steuerung der Ein- und Auslaßventile. Diese Bremsdruckregelvorrichtung arbeitet mit einem zum Hauptzylinder koaxial angeordneten hydraulichen Verstärker.

In der Deutschen Patentanmeldung P 37 27 330.2 wird eine Bremsdruckregelvorrichtung, insbesondere Antiblockierregelvorrichtung, für eine hydraulische Bremsanlage für Kraftfahrzeuge, beschrieben, die einen Unterdruckbremskraftverstärker umfaßt.

Bei den Bremsdruckregelvorrichtungen des geannten Standes der Technik werden Hydraulikaggregate verwendet, wie sie Gegenstand der Deutschen Patentanmeldung P 37 29 216.1 sind. In der letztgenannten Patentanmeldung wird ein Hydraulikaggregat für eine hydraulische Steuer- oder Regelvorrichtung, insbesondere für eine Bremsdruckregelvorrichtung in Antiblockierregelsystemen oder Antriebsschlupfregelsystemen für Kraftfahrzeuge, mit mindestens einem, eine Gruppe von elektromagnetisch schaltbaren Ventilen umfassenden, Ventilblock und einem Anschlußteil für weitere Komponenten der Steuer- oder Regelvorrichtung beschrieben.

In dieser Deutschen Patentanmeldung wird vorgeschlagen, daß die Druckmitteleingänge und -ausgänge der elektromagnetisch schaltbaren Ventile, die mit Druckmitteleingängen und -ausgängen der weiteren Komponenten der Steuer- oder Regelvorrichtung schaltungsmäßig zu verbinden sind, im Bereich einer Außenfläche des Ventilblocks angeordnet sind, daß die Druckmitteleingänge und -ausgänge der weiteren Steuer- oder Regelvorrichtung im Bereich einer Außenfläche des Anschlußteils der Steuer- oder Regelvorrichtung angeordnet sind und daß mindestens ein Verteilerelement vorgesehen ist, welches Druckmittelkanäle aufweist, die schaltungsmäßig zugeordnete Ein- und Ausgänge des Ventilblocks einerseits und der weiteren Komponenten der Steuer- oder Regelvorrichtung andererseits miteinander verbinden.

Bei den Gegenständen des Standes der Technik ist eine getrennte Anordnung des Ventilblocks einerseits und des elektronischen Reglers andererseits vorgesehen. Dies ist von grundsätzlichem Nachteil. Es macht den Aufbau und die Montage der Gesamtanlage im Fahrzeug kompliziert und teuer. Ein sehr umfangreicher Kabelbaum ist notwendig.

Es ist zwar aus der EP-A-0 105 219 eine hydraulische Druckregelvorrichtung bekannt, die zwischen wenigstens einem Elektromagnetventil aufnehmenden Ventilblock und einem den Ventilblock verschließenden Deckel eine Grundplatte zur Aufnahme einer Auswerteschaltung aufweist. Da die Grundplatte am Ventilblock derart starr angeflanscht ist, daß zwischen dem Boden der Grundplatte und dem oberen Ende eines Bremskraftverstärkers ein bestimmter bestand eingehalten werden muß, können Zugbeanspruchungen zwischen der die Auswerteeinheit aufnehmenden Grundplatte und dem Ventilblock zur Funktionsstörung auf der Grundplatte angeordneten Meßwertgebers führen, da der die Grundplatte in Richtung des Bremskraftverstärkers durchdringende Stößel des Meßwertgebers von der Grundplatte geführt werden muß. Als weiterer Nachteil ist das erforderliche Einjustieren jedes einzelnen auf der Grundplatte angeordneten Elektromagnetventils zu betrachten, um die in dem Ventilblock verlaufenden Druckmittelkanäle präzise steuern zu können. Wenig vorteilhaft erweist sich auch die starre Verbindung der Kontaktvorrichtung zur Leiterbahn, wodurch nicht unerhebliche mechanische und thermische Beanspruchungen bereits bei der Montage oder während der Funktionstätigkeit entstehen können.

Daher ist es die Aufgabe der Erfindung, eine kompaktbauende Vereinigung der Hydraulikeinheit mit dem elektronischen Regler zu schaffen, die Zugbeanspruchung widerstehen kann und einen Toleranzausgleich zwischen den Komponenten des Aggregates ermöglicht.

Diese Aufgabe wird durch die den Patentanspruch 1 kennzeichnenden Merkmale gelöst.

Damit wird vorgeschlagen, daß im Bereich des Ventilaufnahmekörpers eine mechanisch, insbesondere durch Zugkräfte, beanspruchte Montage-, Positionier- und Verankerungsvorrichtung vorgesehen ist, die den elektronischen Regler und den Ventilaufnahmekörper verbindet, daß im Bereich des Deckels eine elektrische Kontaktvorrichtung vorgesehen ist, die elektrischen Leitungen für die Strombeaufschlagung der Spulen mit dem elektronischen Regler verbindet.

Gleichzeitig um eine gute Dichtung der Kontaktvorrichtung zu gewährleisten, wird vorgeschlagen, daß die elektrische Kontaktvorrichtung als Führungs-, Fixier- und Toleranzausgleichselement ausgebildet, und insbesondere mit einem elastischen Führungs-, Fixier-, Toleranzausgleichs- und Dichtungskörper versehen ist.

Um eine gute Wärmeabführung zu erreichen wird vorgeschlagen, daß eine körperliche Distanz, die eine Wärmeabführung durch Konvektion zuläßt, zwischen dem elektronischen Regler einerseits und dem Ventilaufnahmekörper und Deckel andererseits angeordnet ist.

Eine technische Lösung, die einen besonderen Schutz gegen die negativen Einflüsse der Umwelt bietet, wird dadurch erzielt, daß am Deckel ein Stutzen für die Aufnahme der elektrischen Kontaktvorrichtung angebracht ist, in dem vorzugsweise eine Dichtung zur Aufnahme eines Kontaktelementes des Reglers angeordnet ist.

In weiterer Ausgestaltung der Erfindung wird vorgeschlagen, daß der Regler im Bereich der elektrischen Kontaktvorrichtung vorzugsweise mittels eines elastischen Körpers einknöpfbar am Deckel befestigt ist.

Zur Vereinfachung der Herstellung wird vorgesehen, daß das Trägerelement für die Leiterbahnen, insbesondere eine Leiterbahnplatte oder Leiterbahnfolie, auf die Kontaktelemente der Spulen, insbesondere auf Kontaktstifte der Spulen, und auf das durch den Deckel ragende Kontaktelement des Reglers aufsteckbar angeordnet ist.

Bei einem Ausführungsbeipsiel wird vorgesehen, daß eine elektrische Klemmverbindung, bestehend aus einem am Leiterbahnträger angeordneten Federkontaktelement und einem am Regler angeordneten Kontaktstift oder Kontaktmesser, vorgesehen ist.

Es wird in einem weiteren Ausführungsbeispiel vorgeschlagen, daß auf dem Leiterbahnträger ein Metallgitter, das die Leiterbahnen verkörpert, angeordnet ist, das mit Kunststoff umspritzt ist.

Für den Deckel wird in einem weiteren Ausführungsbeispiel vorgeschlagen, daß er aus einem Rahmen und einer im Rahmen leicht demontierbar befestigten, insbesondere einknöpfbaren oder einschnappbaren, Platte besteht.

Unter bestimmten Bedingungen kann es vorteilhaft sein, daß die Steckverbindung außerhalb des Deckels hergestellt wird. Um dies zu erreichen wird vorgesehen, daß die elektrische Kontaktvorrichtung eine aus dem unter dem Deckel angeordneten Innenraum herausziehbare Steckverbindung umfaßt.

Zur Vereinfachung der Montage wird weiterhin vorgeschlagen, daß die elektrische Kontaktvorrichtung eine am Regler befestigte Klemmvorrichtung umfaßt, die bei Montage des Reglers eine Klemmverbindung mit dem Leiterbahnträger herstellt. In einem weiteren Ausführungsbeispiel wird eine am Ventilaufnahmekörper flach anliegende Montageplattform für den Deckel vorgesehen.

Als weitere Montagehilfe wird vorgeschlagen, daß mindestens eine, vorzugsweise Domform aufweisende, Ventilhülse als Zentriermittel für das Aufsetzen der Leiterbahnträger ausgebildet ist.

Eine weitere Lösungsalternative sieht vor, daß der Deckel oder ein Teil des Deckels als elektronischer Regler oder als ein Teil eines elektronischen Reglers ausgebildet ist, wobei in der Nachbarschaft der Stirnflächen der Spulen mindestens ein Trägerelement für Leiterbahnen und elektronische Bauteile angeordnet ist.

Gemäß einem weiteren Ausführungsbeispiel wird vorgeschlagen, daß mindestens eine Wandung eines elektronischen Reglers als Deckel des Ventilblockaggregats ausgebildet ist.

Eine besonders raumsparende Lösung wird dadurch erreicht, daß mindestens eine Wandung des elektronischen Reglers als Deckel des Ventilblockaggregats und als Trägerelement für Leiterbahnen und elektronische Bauteile ausgebildet ist.

Weiterhin kann vorgesehen sein, daß der Deckel mindestens einen Rahmenkörper umfaßt, an dem mindestens ein Trägerelement für Leiterbahnen und elektrische Bauteile angeordnet ist.

In einem weiteren Ausführungsbeispiel wird vorgeschlagen, daß zwischen dem Rahmenkörper und dem Ventilaufnahmekörper ein, vorzugsweise rahmenförmiger, Adapter angeordnet ist.

Gute Voraussetzungen für die Anordnung einer Hybridschaltung wird dadurch erreicht, daß am rahmenförmigen Körper eine Außenplatte, die vorzugsweise aus Aluminium hergestellt ist, angeordnet ist, die als Unterlage für eine Trägerplatte für Leiterbahnen und elektronische Bauteile ausgestaltet ist, wobei die Trägerplatte vorzugsweise aus Keramik besteht, daß eine Innenplatte vorgesehen ist, die als Trägerelement ausgebildet ist und in ihrem Innern und/oder an ihrer Oberfläche Leiterbahnen und elektronische Bauteile aufnimmt.

Es wird weiterhin vorgeschlagen, daß der rahmenförmige Körper eine Höhe aufweist, die die über den Ventilaufnahmekörper hinausragenden Teile der Spulen überragt.

Weitere Einzelheiten der Erfindung sind der folgenden Beschreibung mehrerer Ausführungsbeispiele zu entnehmen. Die Ausfuhrungsbeispiele werden anhand von fünfzehn Figuren erläutert.

Figur 1 zeigt ein Aggregat, bestehend aus einem elektronischen Regler und einer Hydraulikeinheit.

Figur 2 ist in vergrößertem Maßstab eine Ansicht in Richtung des Pfeils II der Figur 1, jedoch unter Fortlassung des elektronischen Reglers.

Figur 3 zeigt ein Ausführungsbeispiel der elektrischen Kontaktvorrichtung.

Figur 4 zeigt ein Detail aus Figur 3 in vergrößertem Maßstab.

Figuren 5 bis 12 zeigen Ausführungsbeispiele der elektrischen Kontaktvorrichtung.

Figur 13 zeigt in einer Schnittdarstellung einen Ventilblock.

Die Figuren 14 und 15 zeigen in einer Schnittdarstellung den Teil eines Ventilblocks mit je einem Ausführungsbeispiel.

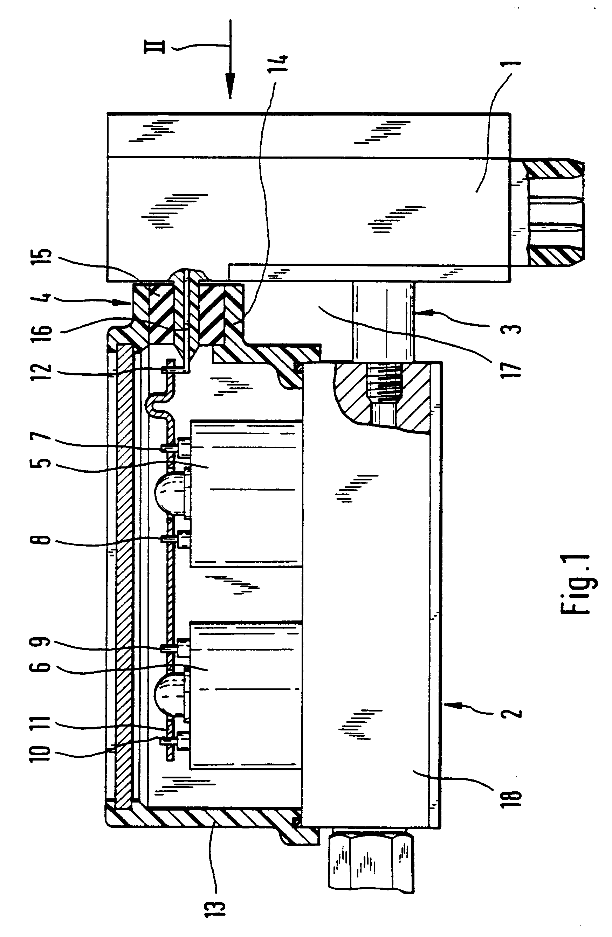

In Figur 1 sind der elektronische Regler 1 und die Hydraulikeinheit, die in ihrer Gesamtheit mit 2 bezeichnet ist, zu einer elektrohydraulischen Druckregelvorrichtung integriert. Die Hydraulikeinheit besteht aus einem Ventilaufnahmekörper 18, in dem Ventile untergebracht sind, aus Spulen und einem Deckel. Mit 3 ist die Gesamtheit einer Montage-, Positionier- und Verankerungsvorrichtung bezeichnet. Im vorliegenden Fall handelt es sich um einen Bolzen, der den Ventilaufnahmekörper und das Gehäuse des Reglers miteinander verbindet und etwaige Zugbeanspruchungen, die von außen auf den Regler einwirken, abfängt.

Mit 4 ist in ihrer Gesamtheit die elektrische Kontaktvorrichtung zwischen dem Regler 1 und der Hydraulikeinheit 2 bezeichnet.

Im einzelnen sind aus Figur 1 die oberen Spulenteile 5, 6 erkennbar, die mit Kontaktstiften 7, 8, 9, 10 versehen sind. Auf den Kontaktstiften ist ein Leiterbahnträger 11 angeordnet, der mit dem Kontaktstift 12 des elektronischen Reglers verbunden ist. Im Leiterbahnträger sind die Leiterbahnen untergebracht, die die jeweiligen Kontaktstifte der Spulen mit den zugeordneten Leiterbahnen des Reglers verbinden. Am Deckel 13 der Hydraulikeinheit, der die oberen Teile der Spulen und die Kontaktstifte sowie den Leiterbahnträger schützend umgibt, ist ein Stutzen 14 angebracht. Der Stutzen umgibt eine Dichtung 15. In der Dichtung ist das Kontaktelement 16 des elektronischen Reglers angeordnet.

Zwischen Regler und Hydraulikeinheit ist ein Luftspalt 17 vorgesehen. Durch diesen Luftspalt wird ein Abtransport der Wärme durch Konvektion möglich.

Das Trägerelement für die Leiterbahnen kann eine Leiterbahnplatte sein oder eine Leiterbahnfolie. Der Kabelabgang im bereich der elektrischen Kontaktvorrichtung kann aus mehreren Kontaktmessern gebildet werden, die eine Kontaktmesserleiste bilden (Mehrfachstecker).

Zusammenfassend kann man sagen, daß die Positioniervorrichtung 3 folgende Aufgaben zu erfüllen hat: Aufnahme von Zugkräften, Positionierung, Montageerleichterung, Verankerung des Reglers im Ventilaufnahmekörper.

Die elektrische Kontaktvorrichtung hat die Aufgaben, Toleranzen auszugleichen, eine gute Abdichtung der elektrischen Kontaktelemente zu gewährleisten und sichere Kontakte herzustellen.

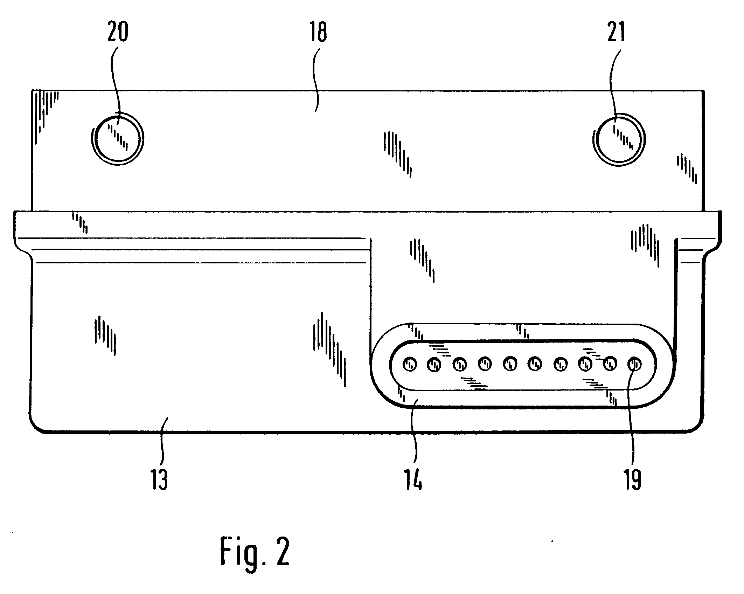

Figur 2 zeigt in vergrößerter Darstellung die Ansicht in Richtung des Pfeils II der Figur 1, jedoch unter Fortlassung des Reglers. Aus Figur 2 sind der Ventilaufnahmekörper 18, siehe auch Figur 1, erkennbar und der Deckel 13 mit dem länglich ausgeführten Stutzen 14. Innerhalb des Stutzes sind die Positionen für die Kontaktstellen der elektrischen Kontaktvorrichtung eingetragen. Eine Position trägt pars pro toto das Bezugszeichen 19. Der Stutzen 14 umgibt also eine Mehrfachsteckvorrichtung.

Mit 20, 21 sind zwei Positionen für Schraubenverbindungen dargestellt, die die eingangs erwähnte Montage-, Positionier- und Verankerungsvorrichtung verkörpern. Über diese beiden Vorrichtungen werden die Zugbeanspruchungen, die auf den Regler aufgeprägt werden, abgefangen.

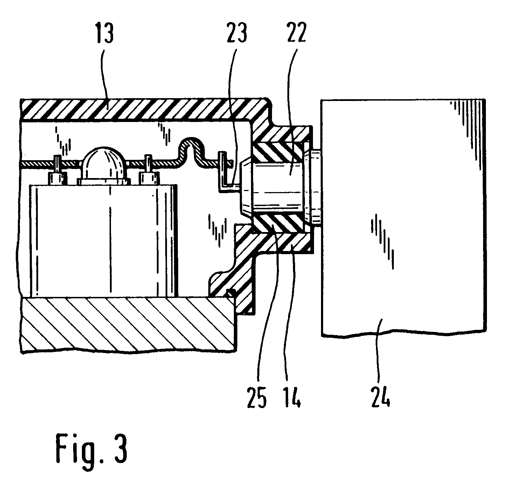

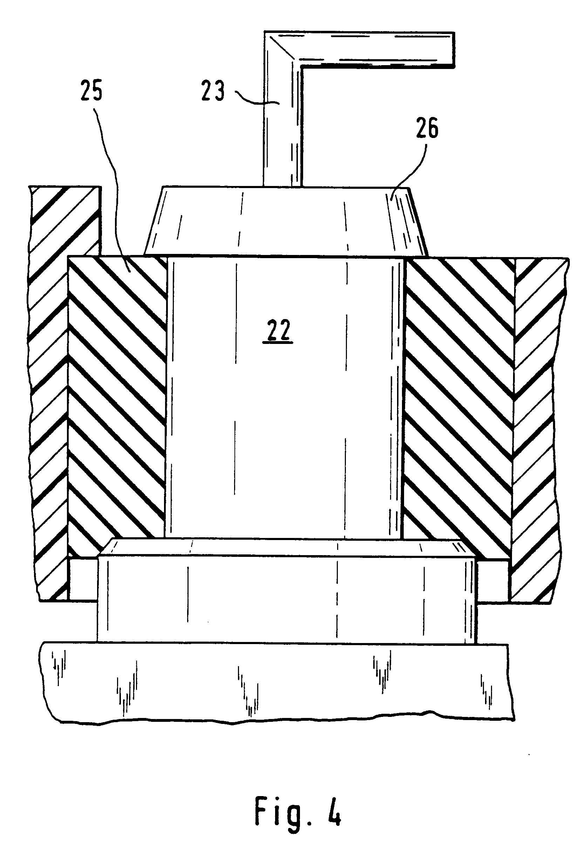

Aus Figur 3 ist erkennbar, daß das Gehäuse 24 des elektronischen Reglers einen Ansatz 22 aufweist, der einen Kontaktstift 23 aufnimmt. Zwischen dem Ansatz 22 und dem Stutzen 14 ist die Dichtung 25 angeordnet. Wie aus Figur 4 hervorgeht, hat der Ansatz 22 ein verbreitertes , Kopfende 26. Der Regler mit Ansatz wird also in den Deckel 13 eingeknöpft.

Der Kontaktstift 23 ist in den Figuren 3 und 4 angewinkelt. Betrachtet man in diesem Zusammenhang Figur 1, dann ist erkennbar, daß die Kontaktstifte 7, 8, 9, 10 der Spulen und der Kontaktstift 23 am Ansatz 22 des Reglers in die gleiche Richtung zeigen. Das Trägerelement 11 für die Leiterbahnen (Leiterbahnplatten oder Leiterbahnfolien) kann auf die Kontaktelemente der Spulen und des Reglers in im wesentlichen einen Arbeitsgang aufgesetzt werden.

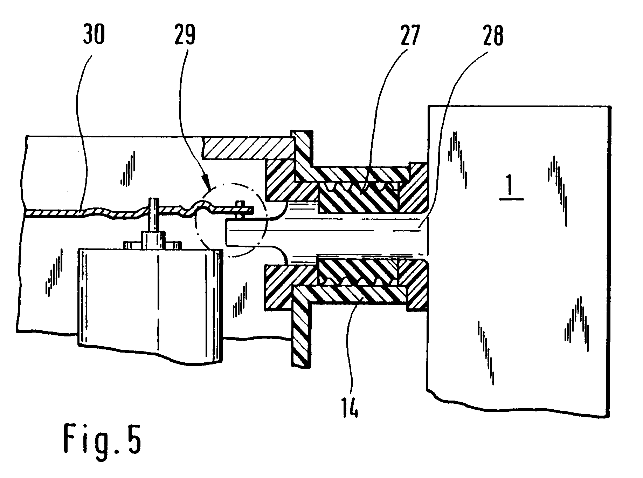

Nach dem Ausführungsbeispiel der Figur 5 ist eine Abdichtung der Kontaktvorrichtung mit gleichzeitigem Toleranzausgleich möglich. Die Dichtung ist hierzu mit elastischen Lippen 27 versehen, die an der Innenwandung des Stutzens 14 anliegen. Der Ansatz 28 am Regler 1 beherbergt die elektrischen Leitungen, die im Bereich 29 mit den Leiterbahnen der Trägerfolie 30 verbunden sind.

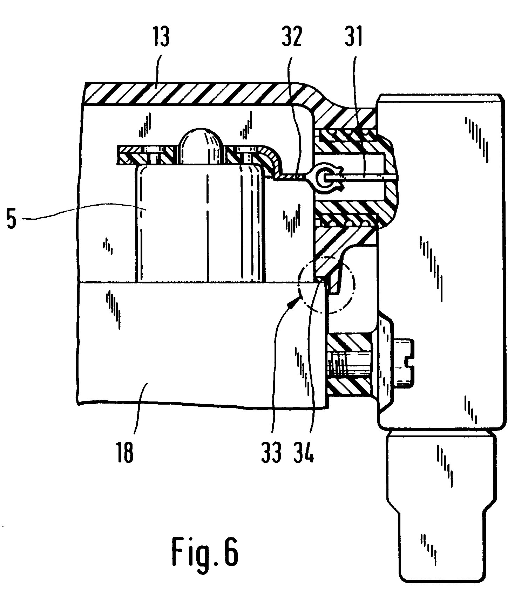

In Figur 6 ist ein Kontaktmesser 31 gezeigt, das durch ein Federkontaktelement 32 umgriffen wird. Bei der Anordnung mehrerer Kontaktmesser nebeneinander wird eine Kontaktmesserleiste gebildet. Der Leiterbahnträger besteht aus einem mit Kunststoff umspritzten Metallgitter, das auf die Anschlußstifte der Spulen aufgesteckt wird. Alternativ dazu kann das Metallgitter aufgelötet, aufgeschweißt, aufgekrimmt oder aufgequetscht sein.

Im Bereich 33 ist eine Dichtung 34 zwischen dem Deckel 13 und dem Ventilaufnahmekörper 18 angeordnet. Diese Dichtung kann eingelegt, aufgedruckt oder aufgespritzt sein.

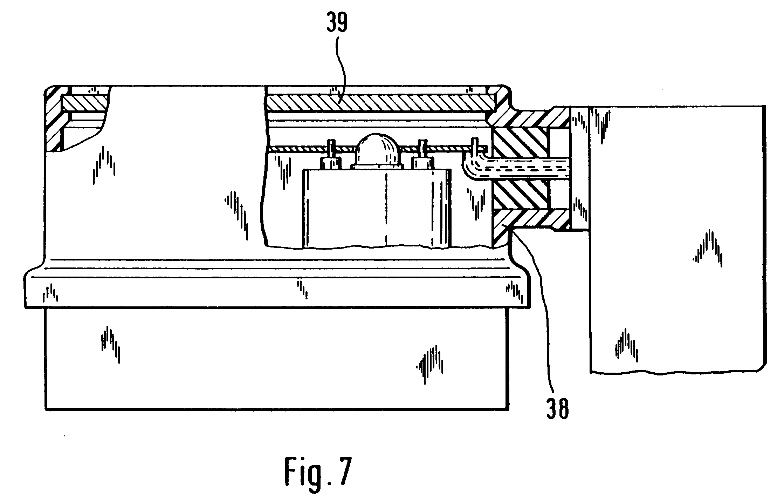

Beim Ausführungsbeispiel gemäß Figur 7 ist der Leiterbahnträger auf die Kontaktstifte der Spulen und den Kontaktstift des Ansatzes am Regler aufgesteckt. Die Montage, Inspektion oder Reparatur im Bereich des Leiterbahnträgers wird nach dem Ausführungsbeispiel gemäß Figur 7 dadurch besonders erleichtert, daß der Deckel aus einem Rahmenteil 38 und einer einknöpfbaren Platte 39, die im Rahmen eingeschnappt ist, besteht. Zwischen dem Rahmen und der einknöpfbaren Platte herrscht also Schnappassung.

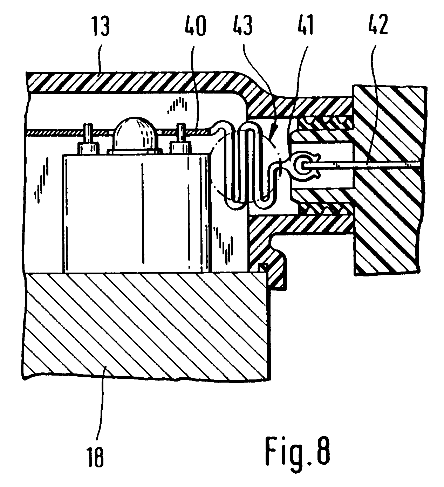

Nach dem Ausführungsbeispiel gemäß Figur 8 ist der Leiterbahnträger 40 im Bereich der elektrischen Kontaktvorrichtung flexibel, beispielsweise als Folie oder Kabel ausgebildet. Die Steckverbindung zwischen dem Regler und der Hydraulikeinheit besteht aus einem Federkontaktelement 41 und einem am Regler angebrachten Kontaktmesser 42. Die Verbindung, bestehend aus Kontaktelement und Messer, kann zur Montage und Demontage aus dem Gehäuse, das aus Ventilaufnahmekörper 18 und Deckel 13 gebildet wird, herausgezogen werden. Wie aus Figur 8 ersichtlich, ist dazu eine mäanderförmige Anordnung des Leiterbahnträgers im eingebauten Zustand im Bereich 43 vorgesehen.

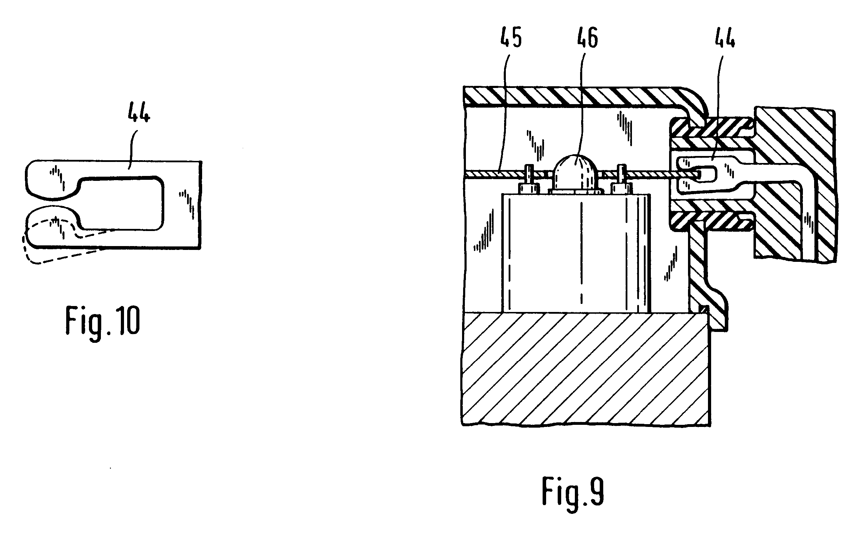

Beim Ausführungsbeispiel gemäß Figur 9 ist am Regler eine Klemmvorrichtung 44 vorgesehen, die bei der Montage des Reglers auf die Hydraulikeinheit eine Klemmverbindung mit dem Leiterbahnträger 45 herstellt.

Die die mechanischen Teile des Elektromagnets umgebende Hülse 46 hat Domform. Diese Domform wird beim Aufsetzen des Leiterbahnträgers 45 als Zentriervorrichtung benutzt.

Die Leiterbahnträger und die Leiterbahnen können durch Kaschieren hergestellt werden. Die Leiterbahnen können in einer anderen Ausführung aus einem Stanzgitter bestehen, das mit Kunststoff umspritzt ist. Es kann auch vorgesehen werden, daß ein Kunststoffträgerelement mit Leiterbahnen bedruckt ist.

In Figur 10 ist die besondere Ausgestaltung des Federkontaktelements 44 des Reglers dargestellt. Gestrichelt ist die aufgeweitete Position und mit ausgezogenen Linien ist die Ausgangsposition des Federkontaktelements 44 wiedergegeben.

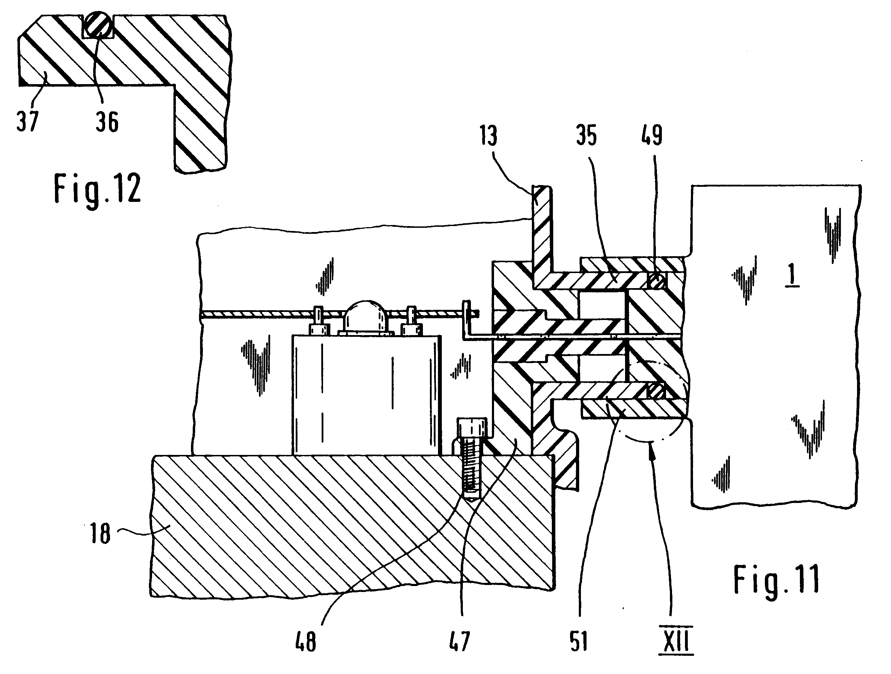

In Figur 11 ist eine Montageplattform 47 dargestellt, die mit dem Ventilaufnahmekörper verschraubt ist. Siehe schematisch dargestellte Schraubenverbindung 48. Die Plattform liegt einerseits flächig am Ventilaufnahmekörper 18 an, andererseits ist eine Anlage am Ventildeckel 13 zu erkennen. Die Abdichtung zwischen dem Stutzen 51 des Reglers 1 und dem Deckel 13 kann durch eine in Bezug auf den Stutzen 35 des Deckels axial angeordnete Dichtung 49 erfolgen. Die Dichtung kann auch radial im am Reglergehäuse angeordneten Stutzen 37 untergebracht sein. Diese Anordnung ist in Figur 12 vergrößert dargestellt. Dort trägt die Dichtung die Bezugsziffer 36.

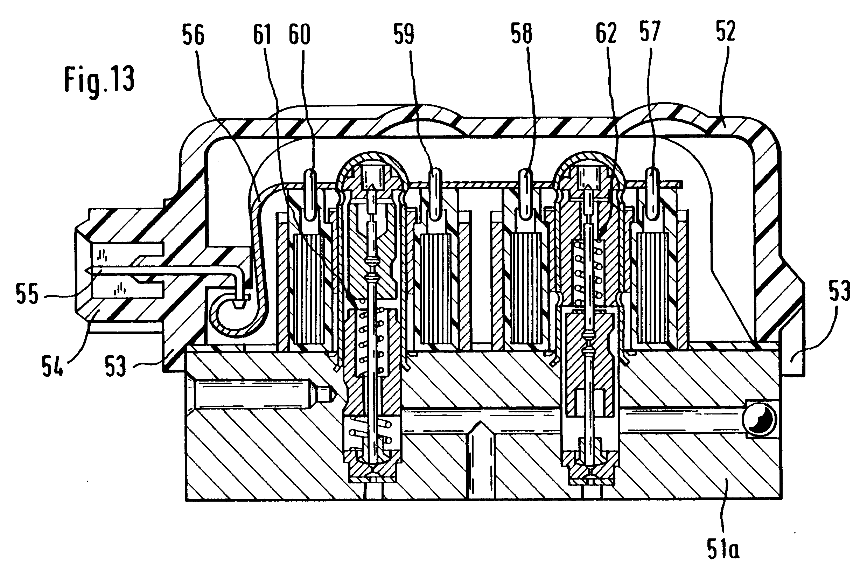

Figur 13 ist die Abbildung eines Ventilblockaggregats des Standes der Technik, das durch die Erfindung mit dem elektronischen Regler zu einem integralen Aggregat kombiniert werden soll.

Das Ventilblockaggregat nach Figur 13 besteht aus einem Ventilaufnahmekörper 51a und einem Deckel 52. Am Deckel 52 befinden sich eine umlaufende Kante 53 und ein Deckelansatz 54 mit einem Kontaktmesser 55. Mit 56 ist eine Anschlußfolie bezeichnet, die Kontaktstifte 57, 58, 59 und 60 mit dem Kontaktmesser verbindet. Die Anschlußfolie enthält entsprechende elektrische Leitungen. Mit 61 ist ein Elektromagnetventil bezeichnet, das stromlos offen ist. 62 ist ein Elektromagnetventil, das stromlos geschlossen ist.

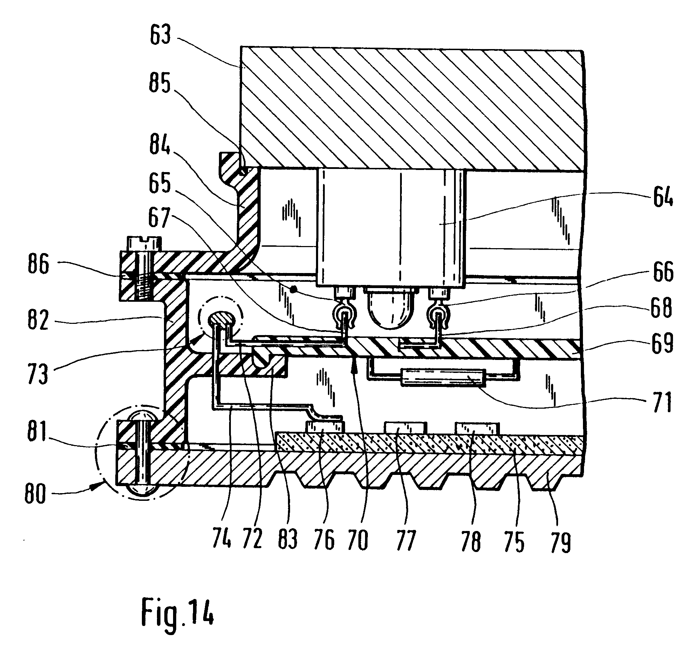

In Figur 14 ist der Ventilaufnahmekörper mit 63 bezeichnet. Der den Ventilaufnahmekörper überragende Teil der Spule trägt das Bezugszeichen 64. An der Stirnfläche der Spule sind zwei Federkontaktelemente 65, 66 angebracht, die zusammen mit den Kontaktstiften 67, 68 Klemmkontakte herstellen.

Unterhalb der Klemmkontakte ist ein plattenförmiges Trägerelement 69 angeordnet. Dieses Trägerelement nimmt in seinem Innern und an seiner Oberfläche 70 Leiterbahnen und elektrische Bauteile auf. Beispielhaft ist ein größeres elektronisches Bauteil 71 eingezeichnet. Bei dem plattenförmigen Trägerelement kann es sich um ein Stanzgitter handeln, dessen Leiterbahnen und dessen integrale elektronische Bauteile mit Kunststoff umspritzt sind.

Eine elektrische Leitung ist aus dem Trägerelement 69 herausgeführt und trägt die Ziffer 72. Sie ist im bereich 73 verlötet mit einer weiteren Leiterbahn 74, die zu einer Keramikplatte 75 führt. Diese Platte ist Trägerelement für elektronische Bauteile und Leiterbahnen. Beispielhaft sind die Bauteile 76, 77, 78 eingezeichnet. Die Leiterbahn 74 ist am elektronischen Bauteil 76 angebondet. Die Keramikplatte 75 ist an einer Aluminiumplatte 79 befestigt. Die Aluminiumplatte und die vorzugsweise in Hybridbauweise aufgebaute Schaltung, die der Keramikplatte 75 zugeordnet ist, können als eine Einheit montiert oder demontiert werden.

Die Aluminiumplatte ist im Bereich 80 vernietet oder verklebt und mit einer Dichtung 81 versehen.

Mit 82 ist ein umlaufender, rahmenförmiger, aus Kunststoff hergestellter Körper bezeichnet. Er weist einen nach innen gerichteten Steg 83 auf. Am Steg ist die oben beschriebene Trägerplatte 69 befestigt.

Der Kunststoffrahmen 82 ist über ein umlaufendes, rahmenförmiges Adapterteil 84 am Ventilaufnahmekörper 63 befestigt. Zwischen dem Ventilaufnahmekörper und dem Adapter ist die Dichtung 85 vorgesehen. Ebenso ist eine Dichtung zwischen dem Adapter 84 und dem umlaufenden Kunststoffrahmen 82 vorgesehen.

Diese Dichtung trägt die Bezugsziffer 86.

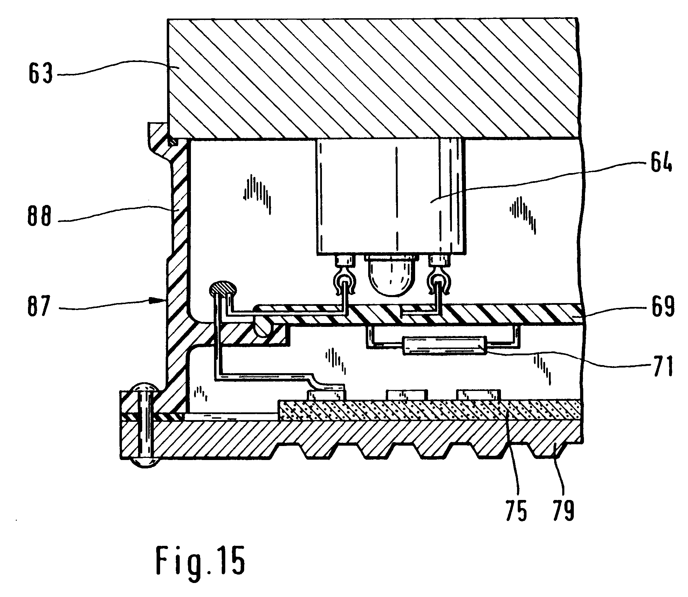

Die Figur 15 zeigt eine Weiterbildung des Ausführungsbeispiels gemäß Figur 14. Anstelle des Adapters 84 der Figur 14 wird in Figur 15 ein ringförmiges Rahmenelement 87 eingesetzt, dessen seitliche Wandung hochgezogen ist, und zwar bis zum Ventilaufnahmekörper 63. Das hochgezogene Teil der Wandung trägt die Ziffer 88.

Im vorangegangen wurden mehrere Ausführungsbeispiele beschrieben. Die Erfindung ist nicht auf diese Ausführungsbeispiele beschränkt. Mit Hilfe des erfinderischen Grundgedankens ist ganz allgemein die Integration von Elektronikbausteinen mit mechanischen oder hydraulischen Baugruppen möglich.

Liste der Einzelteile

1 Elektronischer Regler
2 Hydraulikeinheit
3 Vorrichtung
4 Vorrichtung
5 Spulenteil
6 Spulenteil
7 Stift
8 Stift
9 Stift
10 Stift
11 Leiterbahnträger
12 Stift
13 Deckel
14 Stutzen
15 Dichtung
16 Kontaktelement
17 Luftspalt
18 Ventilaufnahmekörper
19 Position, Kontaktstelle
20 Position, Schraubenverbindung
21 Position, Schraubenverbindung
22 Ansatz
23 Kontaktstift
24 Gehäuse
25 Dichtung
26 Kopfende
27 Lippen
28 Ansatz
29 Bereich
30 Folie
31 Kontaktmesser
32 Federkontaktelement
33 Bereich
34 Dichtung
35 Stutzen
36 Dichtung
37 Stutzen
38 Rahmenteil
39 Platte
40 Leiterbahnträger
41 Federkontaktelement
42 Kontaktmesser
43 Bereich
44 Klemmvorrichtung
45 Leiterbahnträger
46 Hülse
47 Montageplattform

48 Schraubenverbindung

49 Dichtung

51 Stutzen

51a Ventilaufnahmekörper

52 Deckel

53 Kante

54 Deckelansatz

55 Kontaktmesser

56 Anschlußfolie

57 Kontaktstift

58 Kontaktstift

59 Kontaktstift

60 Kontaktstift

61 SO-Ventil

62 SG-Ventil

63 Ventilaufnahmekörper

64 Teil der Spule

65 Federkontaktelement

66 Federkontaktelement

67 Stift

68 Stift

69 Trägerelement

70 Oberfläche

71 Bauteil

72 Leiterbahn

73 Bereich

74 Leiterbahn

75 Keramikplatte

76 Bauteil

77 Bauteil

78 Bauteil

79 Aluminiumplatte

80 Bereich

81 Dichtung

82 Körper, Rahmen

83 Steg

84 Adapterteil

85 Dichtung

86 Dichtung

87 Rahmenelement

88 Teil

## Patentansprüche

1. Elektrohydraulische Druckregelvorrichtung, insbesondere Bremsdruckregelvorrichtung, wie Antiblokkierregelvorrichtung, Antriebsschlupfregelung, bestehend aus einem oder mehreren elektromagnetisch betätigbaren Hydraulikventilen (Elektromagnetventilen) (61, 62), die blockförmig in einem Ventilaufnahmekörper (18, 63, 51a) angeordnet sind, mit Spulen (5, 6), die den Ventilaufnahmekörper (18, 63) überragen, wobei die Spulen (5, 6) an ihren den Ventilaufnahmekörper (18, 63, 51a) überragenden Teilen mit Kontaktelementen (7 - 10, 55, 57 - 60, 65, 66) versehen sind, aus einem Deckel (13), der die überragenden Spulenteile und die Kontaktelemente abdeckt, aus einem Trägerelement (11, 40, 45, 69) für Leiterbahnen (72), das innerhalb des Deckels (15) angeordnet ist, und aus einem elektronischen Regler (1) (Regler), wobei der Deckel (13) oder ein Teil des Deckels (13) als elektronischer Regler (1) oder als Teil eines elektronischen Reglers (1) ausgebildet ist, dadurch **gekennzeichnet**, daß im Bereich des Ventilaufnahmekörpers (18) eine mechanisch, durch Zugkräfte beanspruchbare Montage-, Positionier- und Verankerungsvorrichtung (3) vorgesehen ist, die den elektronischen Regler (1) und den Ventilaufnahmekörper (18) verbindet, daß im Bereich des Deckels (13) eine elektrische Kontaktvorrichtung (4) vorgesehen ist, die die elektrischen Leitungen für die Strombeaufschlagung der Spulen (5, 6) mit dem elektronischen Regler (1) verbindet und daß die elektrische Kontaktvorrichtung (4) als Führungs-, Fixier- und Toleranzausgleichselement ausgebildet, und insbesondere mit einem elastischen Führungs-, Fixier-, Toleranzausgleichs- und Dichtungskörper (15) versehen ist.

2. Elektrohydraulische Druckregelvorrichtung nach Anspruch 1, dadurch **gekennzeichnet**, daß eine körperliche Distanz (17), die insbesondere eine Wärmeabführung, vorzugsweise durch Konvektion, zuläßt, zwischen dem elektronischen Regler (1) einerseits und dem Ventilaufnahmekörper (18) und Deckel (13) andererseits vorgesehen ist.

3. Elektrohydraulische Druckregelvorrichtung nach Anspruch 1 oder 2, dadurch **gekennzeichnet**, daß am Deckel (13) ein Stutzen (14) für die Aufnahme der elektrischen Kontaktvorrichtung (4) angebracht ist, in dem vorzugsweise eine Dichtung (15) zur Aufnahme eines Kontaktelements (16) des Reglers (1) angeordnet ist.

4. Elektrohydraulische Druckregelvorrichtung nach einem oder mehreren der vorangegangenen Ansprüche, dadurch **gekennzeichnet,** daß der Regler im Bereich der elektrischen Kontaktvorrichtung (4) mittels eines elastischen Körpers (22) einknöpfbar am Deckel (13) befestigt ist.

5. Elektrohydraulische Druckregelvorrichtung nach einem oder mehreren der vorangegangenen Ansprüche, dadurch **gekennzeichnet,** daß das Trägerelement (11) für die Leiterbahnen, insbesondere eine Leiterbahnplatte oder Leiterbahnfolie, auf die Kontaktelemente (7, 8, 9, 10) der Spulen, insbesondere auf Kontaktstifte der Spulen (5, 6), und vorzugsweise auf das durch den Deckel (13) ragende Kontaktelement (16) des Reglers (1) aufsteckbar angeordnet ist.

6. Elektrohydraulische Druckregelvorrichtung nach einem oder mehreren der vorangegangenen Ansprüche, dadurch **gekennzeichnet,** daß eine elektrische Klemmverbindung, bestehend aus einem am Leiterbahnträger angeordneten Federkontaktelement (32) und einem am Regler angeordneten Kontaktstift oder Messer (31), vorgesehen ist.

7. Elektrohydraulische Druckregelvorrichtung nach einem oder mehreren der vorangegangenen Ansprüchen, dadurch **gekennzeichnet,** daß auf dem Leiterbahnträger (11) ein Metallgitter, das die Leiterbahnen verkörpert, angeordnet ist, das mit Kunststoff umspritzt ist.

8. Elektrohydraulische Druckregelvorrichtung nach einem oder mehreren der vorangegangenen Ansprüche, dadurch **gekennzeichnet,** daß der Deckel aus einem Rahmen (38) und einer im Rahmen leicht demontierbar befestigten, insbesondere einknöpfbaren oder einschnappbaren, Platte (39) besteht.

9. Elektrohydraulische Druckregelvorrichtung nach einem oder mehreren der vorangegangenen Ansprüche, dadurch **gekennzeichnet,** daß die elektrische Kontaktvorrichtung (4) eine aus dem unter dem Deckel angeordneten Innenraum herausziehbare Steckverbindung (41, 42) umfaßt.

10. Elektrohydraulische Druckregelvorrichtung nach einem oder mehreren der vorangegangenen Ansprüche, dadurch **gekennzeichnet,** daß die elektrische Kontaktvorrichtung (4) eine am Regler befestigte Klemmvorrichtung (44) umfaßt, die bei Montage des Reglers eine Klemmverbindung mit dem Leiterbahnträger (45) herstellt.

11. Elektrohydraulische Druckregelvorrichtung nach einem oder mehreren der vorangegangenen Ansprüche, dadurch **gekennzeichnet,** daß eine am Ventilaufnahmekörper (18) flach anliegende Montageplattform (47) für den Deckel (13) vorgesehen ist.

12. Elektrohydraulische Druckregelvorrichtung nach einem oder mehreren der vorangegangenen Ansprüche, dadurch **gekennzeichnet,** daß mindestens eine, vorzugsweise Domform (46) aufweisende, Ventilhülse als Zentriermittel für die Montage des Leiterbahnträgers (45) ausgebildet ist.

13. Elektrohydraulische Druckregelvorrichtung nach Anspruch 1, dadurch **gekennzeichnet**, daß in der Nachbarschaft der Stirnflächen der Spulen (64) mindestens ein Trägerelement (69) für Leiterbahnen und elektronische Bauteile angeordnet ist.

14. Elektrohydraulische Druckregelvorrichtung nach Anspruch 13, dadurch **gekennzeichnet**, daß mindestens eine Wandung (69, 79) eines elektronischen Reglers als Deckel des Ventilaufnahmekörpers ausgebildet ist.

15. Elektrohydraulische Druckregelvorrichtung nach Anspruch 13 oder 14, dadurch **gekennzeichnet**, daß mindestens eine Wandung (69, 79) des elektronischen Reglers als Deckel des Ventilaufnahmekörpers (63) und als Trägerelement für Leiterbahnen und elektronische Bauteile (71, 76, 77, 78) ausgebildet ist.

16. Elektrohydraulische Druckregelvorrichtung nach einem oder mehreren der Ansprüche 13 - 15, dadurch **gekennzeichnet,** daß der Deckel mindestens einen Rahmenkörper (82) umfaßt, an dem mindestens ein Trägerelement (69) für Leiterbahnen (72) und elektrische Bauteile (71) angeordnet ist.

17. Elektrohydraulische Druckregelvorrichtung nach einem oder mehreren der Ansprüche 13 - 16, dadurch **gekennzeichnet**, daß zwischen dem Rahmenkörper und dem Ventilaufnahmekörper (63) ein, vorzugsweise rahmenförmiger, Adapter (84) angeordnet ist.

18. Elektrohydraulische Druckregelvorrichtung nach einem oder mehreren der Ansprüche 13 - 17, dadurch **gekennzeichnet,** daß am rahmenförmigen Körper (82) eine Außenplatte (79), die vorzugsweise aus Aluminium hergestellt ist, angeordnet ist, die als Unterlage für eine Trägerplatte (75) für Leiterbahnen und elektronische Bauteile (76, 77, 78) ausgestaltet ist, wobei die Trägerplatte (75) vorzugsweise aus Keramik besteht, daß eine Innenplatte (69) vorgesehen ist, die als Trägerelement ausgebildet ist und in ihrem Innern und/oder an ihrer Oberfläche (70) Leiterbahnen und elektronische Bauteile (71) aufnimmt.

19. Elektrohydraulische Druckregelvorrichtung nach einem oder mehreren der Ansprüche 13 - 18, dadurch **gekennzeichnet,** daß der rahmenförmige Körper (87, 88) eine Höhe aufweist, die die über den Ventilaufnahmekörper (63) hinausragenden Teile (64) der Spulen überragt.

## Claims

1. An electrohydraulic pressure control means, in particular a brake pressure control means such as an anti-locking control system or a traction slip control system comprising one or a plurality of electromagnetically operable hydraulic valves (solenoid valves) (61, 62) which are arranged blockwise in a valve-accommodating body (18, 63, 51a), comprising coils (5, 6) extending over the valve-accommodating body (18, 63), with the coils (5, 6) being provided with contact elements (7 to 10, 55, 57 to 60, 65, 66) on their parts extending over the valve-accommodating body (18, 63, 51a), comprising a lid (13) covering the protruding coil portions and the contact elements, comprising a carrier element (11, 40, 45, 69) for conductor (tracks) (72) which is disposed within the said lid (15), and comprising an electronic control means (1) (controller), with the lid (13) or part of the lid (13) being designed as electronic controller (1) or as part of an electronic controller (1), **characterised** in that provided in the area of the valve-accommodating boy (18) is a mounting, positioning and anchoring means (3) which is mechanically loadable by tensile stresses and which interconnects the electronic controller (1) and the valve-accommodating body (18), in that provided in the area of the lid (13) is an electrical contact means (4) connecting the electrical conduits for applying electric power to the coils (5, 6) to the electronic controller (1), and in that the electrical contact means (4) is configured as a guiding, fixing and tolerance-balancing element and, in particular, is provided with a resilient guiding, fixing, tolerance-balancing and sealing body (15).

2. An electrohydraulic pressure control means as claimed in claim 1, **characterised** in that a physical distance (17) especially permitting a heat dissipation, preferably by convection, is provided between the electronic controller (1), on the one hand, and the valve-accommodating body (18) and the lid (13), on the other hand.

3. An electrohydraulic pressure control means as claimed in claim 1 or 2, **characterised** in that provided on the lid (13) is a connecting piece (14) for accommodating the electrical contact means (4) in which a sealant (15) for accommodating a contact element (16) of the controller (1) is preferably arranged.

4. An electrohydraulic pressure control means as claimed in any one or more of the preceding claims, **characterised** in that the controller, in the area of the electrical contact means (4), is secured to the lid (13) by being buttoned thereinto by means of a resilient element (22).

5. An electrohydraulic pressure control means as claimed in any one or more of the preceding claims, **characterised** in that the carrier element (11) for the conductors, in particular a conductor plate or conductor foil, is disposed in a manner pluggable on the contact elements (7, 8, 9, 10) of the coils, especially on contact pins of the coils (5, 6) and, preferably, on the contact element (16) of the controller (1) protruding through the lid (13).

6. An electrohydraulic pressure control means as claimed in any one or more of the preceding claims, **characterised** in that an electrical clamping connection is provided comprising a spring contact element (32) located on the conductor carrier, and a contact pin or knife (31) located on the controller.

7. An electrohydraulic pressure control means as claimed in any one or more of the preceding claims, **characterised** in that disposed on the conductor carrier (11) is a metal grid embodying the conductor tracks and being spray-coated with a plastic material.

8. An electrohydraulic pressure control means as claimed in any one or more of the preceding claims, **characterised** in that the lid comprises a frame (38) and a plate (39) easily detachably secured, especially by buttons or snap means, to the frame.

9. An electrohydraulic pressure control means as claimed in any one or more of the preceding claims, **characterised** in that the electrical contact means (4) comprises a plug connection (41, 42) removable from the interior chamber disposed underneath the lid.

10. An electrohydraulic pressure control means as claimed in any one or more of the preceding claims, **characterised** in that the electrical contact means (4) comprises a clamp means (44) fixed to the controller and, in the assembly of the controller, establishing a clamping connection to the conductor carrier (45).

11. An electrohydraulic pressure control means as claimed in any one or more of the preceding claims, **characterised** in that a mounting platform (47) for the lid (13) in flat abutment with the valve-accommodating body (18) is provided.

12. An electrohydraulic pressure control means as claimed in any one or more of the preceding claims, **characterised** in that at least one valve sleeve, preferably of dome-shaped configuration (46), is configured as a centering means for the assembly of the conductor carrier (45).

13. An electrohydraulic pressure control means as claimed in claim 1, **characterised** in that at least one carrier element (69) for conductors and electronic components is disposed in the vicinity of the front faces of the coils (64).

14. An electrohydraulic pressure control means as claimed in claim 13, **characterised** in that at least one wall (69, 79) of an electronic controller is designed as lid of the valve-accommodating body.

15. An electrohydraulic pressure control means as claimed in claim 13 or 14, **characterised** in that at least one wall (69, 79) of the electronic controller is designed as lid of the valve-accommodating body (63) and as carrier element for conductors and electronic components (71, 76, 77, 78).

16. An electrohydraulic pressure control means as claimed in any one or more of the claims 13 to 15, **characterised** in that the lid comprises at least one frame element (82) on which is located at least one carrier element (69) for conductors (72) and electronic components (71).

17. An electrohydraulic pressure control means as claimed in any one or more of the claims 13 to 16, **characterised** in that disposed between the frame element and the valve-accommodating body (63) is an adapter (84) preferably of frame-type configuration.

18. An electrohydraulic pressure control means as claimed in any one or more of the claims 13 to 17, **characterised** in that disposed on the frame-shaped body (82) is an external plate (79) preferably made of aluminum and configured as a substrate for a carrier plate (75) for conductors and electronic components (76, 77, 78), with the carrier plate (75) preferably being made of ceramics, that an internal plate (69) is provided which is configured as a carrier element and receives in its interior and/or at its surface (70) conductors and electronic components (71).

19. An electrohydraulic pressure control means as claimed in any one or more of the claims 13 to 18, **characterised** in that the frame-shaped body (87, 88) is of a height protruding beyond the parts (64) of the coils which project from the valve-accommodating body (63).


**Revendications**

1. Dispositif électrohydraulique de régulation de pression, notamment dispositif de régulation de pression de freinage, tel que dispositif de régulation antiblocage ou dispositif de régulation du glissement de traction, constitué, d'une part, d'une ou plusieurs valves hydrauliques à actionnement électromagnétique (61, 62) (valves électromagnétiques) qui sont disposées en forme de bloc dans un corps (18, 63, 51a) de logement de valves et comportent des bobines (5, 6) dépassant de ce corps (18, 63), ces bobines (5, 6) étant pourvues d'éléments de contact (7-10, 55, 57-60, 65, 66) dans leurs parties dépassant du corps (18, 63, 51a) de logement de valves, et, d'autre part, d'un couvercle (13), qui recouvre les parties des bobines qui dépassent et les éléments de contact, d'un élément (11, 40, 45, 69) de support de pistes conductrices (72), qui est disposé à l'intérieur du couvercle (13), et d'un régulateur électronique (1) (régulateur), le couvercle (13), ou une partie de ce couvercle (13), étant réalisé en tant que régulateur électronique (1) ou en tant que partie d'un régulateur électronique (1), **caractérisé** en ce que, dans la zone du corps (18) de logement de valves, il est prévu un dispositif mécanique d'assemblage, positionnement et ancrage (3) qui est agencé de façon à pouvoir être sollicité de préférence par des forces de traction, et qui réunit le régulateur électronique (1) et le corps (18) de logement des valves, et en ce que, dans la zone du couvercle (13), il est prévu un dispositif de contacts électriques (4) qui relie les conducteurs électriques, prévus pour l'alimentation des bobines (5, 6) en courant, au régulateur électronique (1) et en ce que le dispositif de contacts électriques (4) est réalisé sous la forme d'un élément de guidage, de fixation et de compensation des jeux de fabrication et est notamment pourvu d'un corps élastique (15) de guidage, de fixation, de compensation des jeux de fabrication et d'étanchéité.

2. Dispositif électrohydraulique de régulation de pression suivant la revendication 1, **caractérisé** en ce qu'une distance matérielle (17), qui permet notamment une dissipation de la chaleur, de préférence par convexion, est prévue entre le régulateur électronique (1) d'une part et le corps (18) de logement de valves et le couvercle (13) d'autre part.

3. Dispositif électrohydraulique de régulation de pression suivant la revendication 1 ou 2, **caractérisé** en ce que, sur le couvercle (13), il est prévu une tubulure (14) qui sert à recevoir le dispositif de contacts électriques (4) et dans laquelle il est de préférence disposé une garniture d'étanchéité (15) servant à recevoir un élément de contact (16) du régulateur (1).

4. Dispositif électrohydraulique de régulation de pression suivant une ou plusieurs des revendications précédentes, **caractérisé** en ce que le régulateur soit fixé sur le couvercle (13) de manière encastrable, dans la zone du dispositif de contacts électriques (4) et au moyen d'un corps élastique (22).

5. Dispositif électrohydraulique de régulation de pression suivant une ou plusieurs des revendications précédentes, **caractérisé** en ce que l'élément (11) de support prévu pour les pistes conductrices, notamment une plaquette à pistes conductrices ou une feuille à pistes conductrices, est disposé de façon à pouvoir s'emboîter sur les éléments de contact (7, 8, 9, 10) des bobines, notamment sur des doigts de contact des bobines (5, 6), et de préférence sur l'élément de contact (16) du régulateur (1) qui traverse le couvercle (13).

6. Dispositif électrohydraulique de régulation de pression suivant une ou plusieurs des revendications précédentes, **caractérisé** en ce qu'il est prévu une jonction électrique par pincement, constituée d'un élément élastique de contact (32), disposé sur le support de pistes conductrices, et d'un doigt de contact ou lame (31), disposé sur le régulateur.

7. Dispositif électrohydraulique de régulation de pression suivant une ou plusieurs des revendications précédentes, **caractérisé** en ce que, sur le supportde pistes conductrices (11), il est disposé une grille métallique qui constitue les pistes conductrices et qui est enrobée de matière plastique.

8. Dispositif électrohydraulique de régulation de pression suivant une ou plusieurs des revendications précédentes, **caractérisé** en ce que le couvercle est constitué d'un cadre (38) et d'une plaque (39) fixée dans ce cadre d'une manière facilement démontable, notamment en étant agencée de façon à pouvoir être encastrée ou à pouvoir être fixée par enclenchement.

9. Dispositif électrohydraulique de régulation de pression suivant une ou plusieurs des revendications précédentes, **caractérisé** en ce que le dispositif de contacts électriques (4) comprend une jonction d'emboîtement (41, 42) pouvant être extraite, par déploiement, de la cavité intérieure située sous le couvercle.

10. Dispositif électrohydraulique de régulation de pression suivant une ou plusieurs des revendications précédentes, **caractérisé** en ce que le dispositif de contacts électriques (4) comprend des moyens de serrage (44) qui sont fixés sur le régulateur et qui, lors de l'assemblage de ce dernier, produisent une jonction de serrage avec le support de pistes conductrices (45).

11. Dispositif électrohydraulique de régulation de pression suivant une ou plusieurs des revendications précédentes, **caractérisé** en ce qu'il est prévu une plate-forme (47) d'assemblage du couvercle (13) qui est appliquée en appui face à face sur le corps (18) de logement de valves.

12. Dispositif électrohydraulique de régulation de pression suivant une ou plusieurs des revendications précédentes, **caractérisé** en ce qu'au moins une douille de valve, présentant de préférence la forme d'un dôme (46), est réalisée en tant que moyen de centrage pour l'assemblage du support de pistes conductrices (45).

13. Dispositif électrohydraulique de régulation de pression suivant la revendication 1, **caractérisé** en ce qu'au voisinage des surfaces frontales des bobines (64), il est disposé au moins un élément (69) de support de pistes conductrices et de composants électroniques.

14. Dispositif électrohydraulique de régulation de pression suivant la revendication 13, **caractérisé** en ce qu'au moins une paroi (69, 79) d'un régulateur électronique est agencée en tant que couvercle du corps de logement de valves.

15. Dispositif électrohydraulique de régulation de pression suivant la revendication 14, **caractérisé** en ce qu'au moins une paroi (69, 79) du régulateur électronique est agencée en tant que couvercle du corps (63) de logement de valves et en tant qu'élément de support de pistes conductrices et de composants électroniques (71, 76, 77, 78).

16. Dispositif électrohydraulique de régulation de pression suivant une ou plusieurs des revendications 13 à 15, **caractérisé** en ce que le couvercle comprend au moins un corps en forme de cadre (82) sur lequel est disposé au moins un élément (69) de support de pistes conductrices (72) et de composants électriques (71).

17. Dispositif électrohydraulique de régulation de pression suivant une ou plusieurs des revendications 13 à 16, **caractérisé** en ce qu'un adaptateur (84), de préférence en forme de cadre, est disposé entre le corps en forme de cadre et le corps (63) de logement de valves.

18. Dispositif électrohydraulique de régulation de pression suivant une ou plusieurs des revendications 13 à 17, **caractérisé** en ce que, sur le corps (82) en forme de cadre, il est disposé une plaquette extérieure (79) qui est de préférence réalisée en aluminium et qui est agencée en tant que base pour une plaquette (75) de support de pistes conductrices et de composants électroniques (76, 77, 78), tandis que cette plaquette de support (75) est de préférence en céramique, et en ce qu'il est prévu une plaquette intérieure (69) qui est agencée en tant qu'élément de support et qui sert à recevoir, intérieurement et/ou sur sa surface (70), des pistes conductrices et des composants électroniques (71 ).

19. Dispositif électrohydraulique de régulation de pression suivant une ou plusieurs des revendications 13 à 18, **caractérisé** en ce que le corps en forme de cadre (87, 88) a une hauteur qui le fait s'étendre au-delà des parties (64) des bobines dépassant du corps (63) de logement de valves.

Fig.1

EP 0 370 080 B1

Fig. 2

Fig. 3

Fig. 4

Fig.5

EP 0 370 080 B1

Fig.6

Fig. 7

Fig. 8

Fig.10

Fig.9

EP 0 370 080 B1

Fig.11

Fig.12

Fig.13

EP 0 370 080 B1

Fig.14

Fig.15

EP 0 370 080 B1